# EUROPÄISCHE PATENTSCHRIFT

(11) **EP 3 098 022 B1**
(45) Veröffentlichungstag und Bekanntmachung des Hinweises auf die Patenterteilung: **13.02.2019**
(21) Anmeldenummer: 15169610.1
(22) Anmeldetag: 28.05.2015
(51) Int. Cl.: B23K 37/02, B23K 26/00, B23P 23/04, B23K 26/12, B23Q 37/00

(54) **AUSWECHSELBARES OPTIKMODUL FÜR EINE LASERBEARBEITUNGSMASCHINE SOWIE ENTSPRECHENDE LASERBEARBEITUNGSMASCHINE**
REPLACEABLE OPTICAL MODULE FOR A LASER-BASED MACHINING DEVICE AND CORRESPONDING LASER-BASED MACHINING DEVICE
MODULE OPTIQUE ÉCHANGEABLE POUR MACHINE D'USINAGE AU LASER ET MACHINE D'USINAGE AU LASER CORRESPONDANTE

(43) Veröffentlichungstag der Anmeldung: 30.11.2016
(73) Patentinhaber: TRUMPF Schweiz AG, 7214 Grüsch (CH)
(72) Erfinder: Szelagowski, Arnd, 73230 Kirchheim unter Teck (DE); Bewer, Thomas, 8805 Richterswil (CH); Gisler, Adrian, 6340 Baar (CH); Imhof, Kilian, 3904 Naters (CH)
(74) Vertreter: Mammel und Maser

(56) Entgegenhaltungen:
- DE-A1- 4 242 057
- DE-C2- 3 050 985
- JP-A- S61 164 738
- US-A- 4 899 030
- US-A1- 2012 261 393

## Beschreibung

Die Erfindung betrifft ein auswechselbares Optikmodul für eine Laserbearbeitungsmaschine gemäß dem Oberbegriff des Anspruchs 1 (siehe, z.B., US2012/261393 A1), sowie eine Laserbearbeitungsmaschine mit einem solchen Optikmodul (siehe Anspruch 8).

Es sind Laserbearbeitungsmaschinen bekannt, welche beispielsweise zur Mikrobearbeitung an Werkstücken eingesetzt werden. Solche Laserbearbeitungsmaschinen umfassen einen Maschinengrundkörper, der eine Laserquelle aufnimmt und einen Werkstückträger zur Aufnahme eines zu bearbeitenden Werkstücks umfasst. Ein von der Laserquelle erzeugter Laserstrahl wird über eine stehende Optik, welche eine Strahlführung und einen Bearbeitungskopf umfasst, auf das Werkstück gerichtet. Bei solchen Laserbearbeitungsmaschinen ist der Bearbeitungskopf auswechselbar. Typische Bearbeitungsköpfe sind Scannerköpfe, die zum Abtragen, gravieren und feinschneiden verwendet werden. Außerdem werden Festoptiken eingesetzt, die vor allem zum Schneiden Verwendung finden. Es können auch Mehrfachanordnungen der o.g. Typen oder auch Kombinationen dieser sinnvoll sein. Zum Bohren und Schneiden mit steilem Wandwinkel finden auch Trepanieroptiken Einsatz. Soll der Bearbeitungskopf gewechselt werden, so ist dies mit einem erheblichen Zeitaufwand verbunden, da beim Bearbeitungskopfwechsel auch stets die Strahlführung neu zu justieren ist.

Die US 2012/0261393 A offenbart ein modulares System, bei welchem an einer Halteplatte ein Einkoppelmodul mittels eines zweidimensional verstellbaren Kreuztischs befestigt ist. Dieses Einkoppelmodul ist mit einem Verlängerungsmodul verbunden. Dieses Verlängerungsmodul nimmt ein Prozessmodul auf, welches eine Düse mit einer Öffnung umfasst, durch welche ein Laserstrahl austreten kann.

Die DE 30 50 985 A offenbart eine Vorrichtung zur Erzeugung eines Bildes auf einem Ausgabemedium entsprechend eines Eingangsignals mit einer Einrichtung zur Erzeugung eines Strahles mit kohärenter Strahlung. Beispielsweise sind der Laser, die optische Einrichtung, die Abtasteinrichtung und die Schlittenbaugruppe durch einen massiven Tisch unterstützt. Auf diesem Haupttisch sind zwei kleinere Tische als Unterstützungen für optische Einrichtungen beziehungsweise die Abtasteinrichtungen der Vorrichtung angeordnet. Dabei sind die Tische oberhalb des Haupttisches starr und ortsfest vorgesehen.

Die JP S61 164 738 A offenbart eine Werkzeugmaschine, bei der ein Laserbearbeitungskopf anstelle eines Werkzeuges, welches mittels einer Maschinenspindel angetrieben wird, zur Maschinenspindel positionierbar ist.

Die US 4,899,030 A offenbart ein Laserstrahl-Schweißverfahren und eine dazugehörige Vorrichtung. Eine Strahlführung ist auf einem verfahrbaren Tisch vorgesehen. Dieser verfahrbare Tisch ist wiederum auf einem weiteren verfahrbaren Tisch angeordnet.

Die DE 42 42 057 A offenbart eine Laserbearbeitungsanlage, insbesondere einen Laserkopf mit einer Düse, die an dem Laserkopf über eine Halteeinrichtung lösbar befestigt ist.

Der Erfindung liegt die Aufgabe zugrunde, einen schnellen und einfachen Wechsel einer Optik an einer Laserbearbeitungsmaschine zu ermöglichen. Ein auswechselbares Optikmodul gemäß der Erfindung ist in Anspruch 1 definiert, welches eine steife Trägerplatte aufweist, an welcher eine Strahlführung fixiert ist, die an einem Ende eine Einkoppelstelle aufweist, welche an einer Auskoppelstelle, die einer Laserquelle zugeordnet ist, anschließbar ist und am anderen Ende einen Bearbeitungskopf aufweist, wobei an der Trägerplatte Komponenten einer Positioniereinrichtung vorgesehen sind, durch welche die Trägerplatte zum Maschinengrundgestell der Laserbearbeitungsmaschine ausgerichtet ist, wobei die Positioniereinrichtung wenigstens ein Zentrierelement und eine komplementäre Zentrieraufnahme und zumindest ein Ausrichtelement sowie eine komplementäre Ausrichtaufnahme aufweist und das zumindest eine Zentrierelement und Ausrichtelement, oder die zumindest eine Zentrieraufnahme und Ausrichtaufnahme an der Trägerplatte vorgesehen sind und wobei das Zentrierelement der Positioniereinrichtung als ein zylindrischer Passstift und das Ausrichtelement als Facettenstift ausgebildet ist, welche jeweils in die als Passhülse ausgebildete Zentrieraufnahme und Ausrichtaufnahme einsetzbar sind. Diese Positioniereinrichtung ermöglicht, dass lediglich ein Ansetzen der Trägerplatte an einem Maschinengrundgestell erforderlich ist und über die einmal ausgerichteten Positionierelemente die Trägerplatte präzise aufgenommen wird. Dadurch kann eine exakte Einkopplung des Laserstrahls von einer Laserquelle in die Strahlführung über Schnittstellen des Strahlengangs an dem Maschinengrundgestell und der Trägerplatte erfolgen. Das wenigstens eine Zentrierelement und Ausrichtelement oder die wenigstens eine Zentrieraufnahme und Ausrichtaufnahme sind an der Trägerplatte vorgesehen. Dadurch ist zum Austausch des Optikmoduls lediglich ein Lösen und anschließendes Anziehen von lösbaren Verbindungselementen erforderlich. Eine Ausrichtung und Nachjustage der Trägerplatte zum Maschinengrundgestell kann entfallen. Durch das als Passstift ausgebildete Zentrierelement kann einerseits eine definierte Aufnahme der Trägerplatte zum Maschinengrundgestell und andererseits ein Drehpunkt mit einer exakt ausgerichteten definierten Lage der Trägerplatte zum Maschinengrundgestell geschaffen werden, um über das benachbarte Ausrichtelement eine Ausrichtung der Trägerplatte zum Maschinengrundgestell zu erzielen.

Dazwischen können beliebige, den Laserstrahl beeinflussende optische Komponenten, wie z.B. Linsen, Filter oder Spiegel, zwischen der Einkoppelstelle und dem Bearbeitungskopf enthalten sein.

Dadurch können die Strahlführung und der Bearbeitungskopf auf der Trägerplatte getrennt von der Laserbearbeitungsmaschine ausgerichtet und einjustiert werden, so dass der eigentliche Wechsel der Optik einer solchen Laserbearbeitungsmaschine lediglich das Lösen des bisherigen Optikmoduls von der Laserbearbeitungsmaschine und darauf folgend das Befestigen des neuen Optikmoduls erfordert. Durch die Anordnung der Strahlführung mit dem Bearbeitungskopf auf der steifen Trägerplatte kann ein Optikwechsel ohne die zeitaufwändige Justage erfolgen, so dass die Produktivität der Laserbearbeitungsmaschine erhöht ist, da die Nebenzeit, welche beispielsweise für die Ausrichtung und Nachjustage der Strahlführung beim Bearbeitungskopftausch erforderlich ist, entfällt.

Bevorzugt ist vorgesehen, dass die Strahlführung fest an der Trägerplatte angeordnete und einjustierte optische Komponenten umfasst. Dadurch können während dem Betrieb gleichbleibende Bedingungen geschaffen werden. Zeitaufwändige Einjustierungen oder Nachjustierungen, welche zu Unterbrechungen der Betriebszeit führen, sind nicht mehr erforderlich.

Des Weiteren ist bevorzugt vorgesehen, dass im Bearbeitungskopf ansteuerbare optische Komponenten angeordnet sind. Beispielsweise kann es sich um sogenannte Scannerköpfe handeln.

Des Weiteren weist das Zentrierelement und/oder das Ausrichtelement und/oder die Zentrieraufnahme und/oder die Ausrichtaufnahme eine Einführschräge auf. Dadurch kann die Montage erleichtert werden, da ein schnelles und sicheres Zusammenführen von dem Zentrierelement in die Zentrieraufnahme und dem Ausrichtelement in die Ausrichtaufnahme erfolgen kann.

Des Weiteren weist die Trägerplatte bevorzugt wenigstens zwei, vorzugsweise mindestens drei, Montage- oder Befestigungsbohrungen zur Aufnahme von schnell lösbaren Verbindungselementen auf. Beispielsweise können Schraubelemente durch die Befestigungsbohrungen hindurch geführt und am Maschinengrundkörper befestigt werden. Vorzugsweise sind drei Befestigungsbohrungen in einem vorzugsweise gleichschenkligen oder gleichseitigen Dreieck an der Trägerplatte vorgesehen, um eine stabile und verkippungsfreie Anlage der Trägerplatte am Maschinengrundkörper zu erzielen.

Des Weiteren ist die Trägerplatte bevorzugt aus demselben Werkstoff wie das Maschinengrundgestell ausgebildet. Bevorzugt ist die Montageplatte aus Granit ausgebildet. Dies weist den Vorteil auf, dass derselbe Werkstoff wie für das Maschinengestell verwendet wird. Dadurch kann auch bei Temperaturschwankungen eine hohe Genauigkeit der Strahlführung aufrecht erhalten bleiben. Als weiterer Vorteil von Granit kann die hohe Steifigkeit genannt werden. Bei geringeren Genauigkeitsanforderungen ist es aber auch möglich die Trägerplatte aus einem anderen Werkstoff ausreichender Steifigkeit herzustellen oder z.B. auch als Sandwichplatte mit Wabenstruktur auszuführen.

Des Weiteren weist die Trägerplatte bevorzugt zumindest eine Montageöffnung zum Anbringen von zumindest einem Hebewerkzeug auf. Dies ermöglicht eine einfache und sichere Handhabung eines solchen auswechselbaren Optikmoduls, welches aufgrund der Verwendung einer Granitplatte sowie der darauf angebrachten Strahlführung und Bearbeitungskopf ein beträchtliches Gewicht aufweisen kann. Dadurch können in einfacher Weise Montagehilfsmittel daran befestigt werden.

Eine Laserbearbeitungsmaschine mit einem auswechselbaren Optikmodul gemäß der Erfindung ist im Anspruch 8 definiert. Durch ein solches auswechselbares Optikmodul kann in schneller und einfacher Weise zwischen zwei verschiedenen Optiken gewechselt werden, die als sogenannte stehende Optiken ausgebildet sind. Es bedarf keiner Nachjustage unmittelbar an der Laserbearbeitungsmaschine. Darüber hinaus ist auch zum Austausch oder Umbau einer Optik kein Fachmann mehr notwendig.

Eine weitere bevorzugte Ausgestaltung der Laserbearbeitungsmaschine sieht vor, dass Komponenten der Positioniereinrichtung an einem Befestigungsabschnitt an dem Maschinengrundgestell angeordnet sind. Die Komponenten der Positioniereinrichtung sind exakt zu einer Schnittstelle für einen Strahlengang zur Führung des von der Laserquelle erzeugten Laserstrahls ausgerichtet.

Des Weiteren ist an dem Befestigungsabschnitt des Maschinengrundgestells eine Schnittstelle zur Laserquelle vorgesehen. Dadurch kann eine exakte Einkopplung des Laserstrahls in die an der Trägerplatte angeordnete Strahlführung erfolgen.

Eine weitere bevorzugte Ausgestaltung der Laserbearbeitungsmaschine sieht an dem Maschinengrundgestell Führungen vor, durch welche die Trägerplatte von einer Einbauposition, bei der die Trägerplatte an dem Befestigungsabschnitt befestigt ist, in einer Montageposition entfernt vom Befestigungsabschnitt verfahrbar ist. Dadurch kann ein erleichterter Austausch ermöglicht sein, da das auswechselbare Optikmodul gegenüber einem Gehäuse der Laserbearbeitungsmaschine herausgefahren werden kann.

Des Weiteren greift die Positioniereinrichtung bevorzugt getrennt zur Führung an der Trägerplatte an. Vorzugsweise greift die Führung an einem oberen Ende der Trägerplatte an, so dass diese hängend gehalten wird. An einem unteren Abschnitt der Trägerplatte sind Komponenten der Positioniereinrichtung vorgesehen.

Die Erfindung sowie weitere vorteilhafte Ausführungsformen und Weiterbildungen derselben werden im Folgenden anhand der in den Zeichnungen dargestellten Beispiele näher beschrieben und erläutert. Die der Beschreibung und den Zeichnungen zu entnehmenden Merkmale können einzeln für sich oder zu mehreren in beliebiger Kombination erfindungsgemäß angewandt werden. Es zeigen:
Figur 1 eine perspektivische Ansicht einer Laserbearbeitungsmaschine mit einem erfindungsgemäßen Optikmodul,
Figur 2 eine perspektivische Ansicht der Laserbearbeitungsmaschine gemäß Figur 1 mit einem zu fixierenden Optikmodul,
Figur 3 eine alternative Ansicht der Anordnung in Figur 2,
Figur 4 eine perspektivische Ansicht auf ein Zentrierelement einer Positioniereinrichtung,
Figur 5 eine perspektivische Ansicht auf ein Ausrichtelement der Positioniereinrichtung und
Figur 6 eine schematische Detailansicht zur Aufhängung des Optikmoduls an einer ausziehbaren Führung der Laserbearbeitungsmaschine.

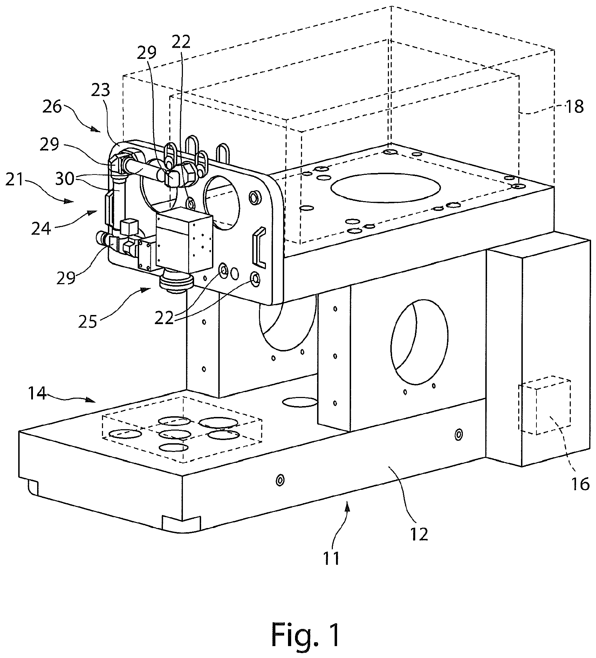

In Figur 1 ist eine Laserbearbeitungsmaschine 11 in Teilen perspektivisch dargestellt. Diese umfasst ein Maschinengrundgestell 12, welches in einem vorderen Bereich einen Werkstückträger 14 aufnimmt. Hierbei kann es sich um einen Werkstückträger 14 handeln, der das zu bearbeitende Werkstück fest einspannt und in einer festen Position zum Maschinengrundgestell 12 verbleibt. Es kann auch ein Werkstückträger 14 vorgesehen sein, der auf einer Linearachsenanordnung befestigt ist, welche zumindest entlang einer Linearachse verfahrbar ist. Außerdem kann ein Werkstückträger 14 vorgesehen sein, welcher alleine oder zusätzlich zu der mindestens einen Linearachse auch mindestens eine Rotationsachse aufweist. Seitlich zum Maschinengrundgestell 12 ist beispielsweise eine Steuerung 16 vorgesehen, durch welche die Laserbearbeitungsmaschine 11 programmierbar ist und angesteuert wird. Weitere für die Bedienung der Laserbearbeitungsmaschine 11 erforderliche Komponenten, wie beispielsweise ein Display, eine Tastatur, Datenverarbeitungseinrichtungen oder dergleichen, sind nicht näher dargestellt.

Auf dem Maschinengrundgestell 12 ist eine Laserquelle 18 vorgesehen, welche mit einem auswechselbaren Optikmodul 21 gekoppelt ist. Dieses auswechselbare Optikmodul 21 ist in einer Einbausituation 26 am Maschinengrundgestell 12 befestigt. Dieses Optikmodul 21 nimmt an einer steifen Trägerplatte 23 eine Strahlführung 24 sowie einen Bearbeitungskopf 25 auf, um einen von der Laserquelle 18 erzeugten Laserstrahl auf den Werkstückträger 14 zu richten, auf dem das Werkstück zur Bearbeitung angeordnet ist. Die Strahlführung 24 umfasst beispielsweise Umlenkspiegel 29 und dazwischen angeordnete Strahlführungsrohre 30. Des Weiteren kann die Strahlführung 24 Elemente, wie beispielsweise Strahlteiler, Filter, Verzögerungsplatten, Adapter für Kamerasysteme, Sensoren und dergleichen, umfassen. Vorzugsweise enthält die Strahlführung keine während der Bearbeitung ansteuerbaren optischen Komponenten, wie z. B. Linsen, Filter oder Spiegel. Der Bearbeitungskopf 25 kann z.B. als Scannerkopf oder mit einer feststehenden Optik oder Trepanieroptik ausgebildet sein. Der Bearbeitungskopf 25 enthält vorzugsweise zumindest ein den Laserstrahl fokussierendes, optisches Element.

Das Maschinengrundgestell 12 ist bevorzugt aus Granit ausgebildet. Ebenso ist die Trägerplatte 23 vorteilhafterweise aus Granit ausgebildet.

Das Optikmodul 21 ist auswechselbar über lösbare Verbindungselemente 22, wie beispielsweise Schrauben, an dem Maschinengrundgestell 12 befestigt.

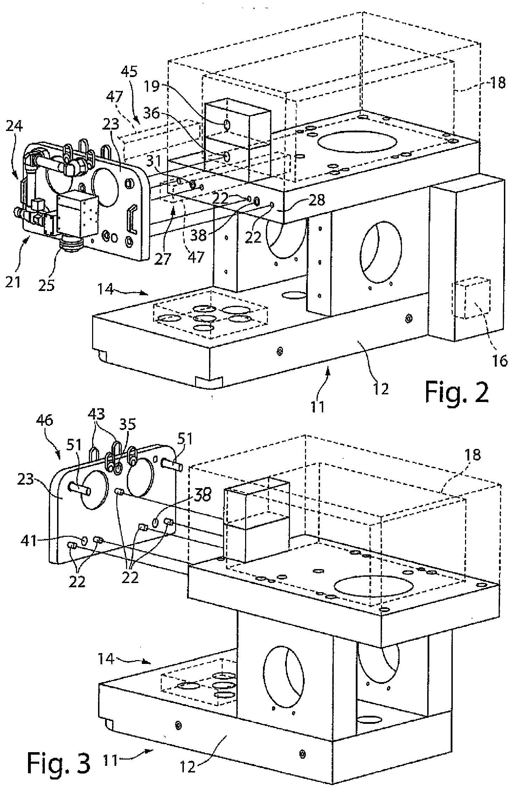

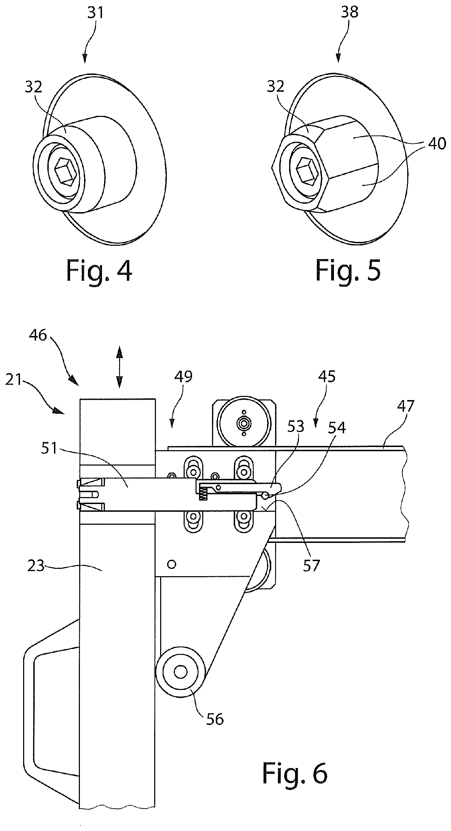

In den Figuren 2 und 3 sind zwei voneinander abweichende perspektivische Ansichten des Maschinengrundgestells 12 mit einem zu montierenden Optikmodul 21 dargestellt. An einer zum Maschinengrundgestell 12 weisenden Seite der Trägerplatte 23 sind Komponenten einer Positioniereinrichtung 27 vorgesehen. Die komplementären Komponenten der Positioniereinrichtung 27 sind ebenfalls an einem Befestigungsabschnitt 28 des Maschinengrundgestells 12 vorgesehen. Die Positioniereinrichtung 27 umfasst ein Zentrierelement 31, welches in Figur 4 näher dargestellt ist. Hierbei handelt es sich gemäß der Erfindung um einen zylindrischen Passstift, der an seinem stirnseitigen freien Ende eine Einführschräge 32 aufweist. Bevorzugt ist dieses Zentrierelement 31 an dem Befestigungsabschnitt 28 des Maschinengrundgestells 12 befestigt. Gegenüber liegend zum Zentrierelement 31 ist in der Trägerplatte 23 eine Zentrieraufnahme 33 vorgesehen, welche bevorzugt als Passhülse ausgebildet ist, so dass eine hochgenaue Positionierung des Zentrierelementes 31 in der Zentrieraufnahme 33 gegeben ist. Gleichzeitig wird durch die Anordnung des Passstiftes in der Passhülse ein Drehpunkt für die Trägerplatte 23 geschaffen, um diese bezüglich einer Winkligkeit zum Maschinengrundgestell auszugleichen, so dass eine Einkoppelstelle 35 der Strahlführung 24 an dem auswechselbaren Optikmodul 21 exakt zur Auskoppelstelle 36 am Maschinengrundgestell 12 zur Laserquelle 18 ausgerichtet wird.

Des Weiteren umfasst die Positioniereinrichtung 27 ein Ausrichtelement 38, welches in Figur 5 näher dargestellt ist. Dieses Ausrichtelement 38 ist gemäß der Erfindung als Facettenstift ausgebildet und umfasst Facetten 40, die beispielsweise einander um 180° gegenüber liegen. Die Facettierung dient dazu, eine überbestimmte Lagerung zu verhindern. Somit dient das Ausrichtelement 38 nur der Einstellung der Winkligkeit des Optikmoduls 21 zum Maschinengrundgestell 12, d.h. der horizontalen Ausrichtung des Optikmoduls 21. In der Trägerplatte 23 ist eine Ausrichtaufnahme 41 eingebracht, insbesondere als Passhülse, welche auf das Ausrichtelement 38 aufsetzbar ist. Auch das Ausrichtelement 38 kann bevorzugt eine Einführschräge 32 aufweisen. Ebenso können vorteilhafterweise die Passhülsen in der Trägerplatte 23 Einführschrägen aufweisen.

Die vorbeschriebene Anordnung der Positionierelemente 27 kann auch vertauscht vorgesehen sein.

Zwischen der Laserquelle 18 und der Auskoppelstelle 36 ist zumindest eine optische Komponente 19 zur Strahlführung und Strahlformung des Laserstrahls, insbesondere zur Justierung der Ausrichtung des Laserstrahls, vorgesehen, welche nur symbolisch dargestellt ist. Beispielsweise können justierbare Spiegel vorgesehen sein. Diese können einmalig eingestellt und ausgerichtet werden, um den aus der Auskoppelstelle 36 auszukoppelnden Laserstrahl einzujustieren. Alternativ kann vorgesehen sein, dass die optischen Komponenten 19 durch ein Sensor-/Aktorsystem angesteuert sind, so dass eine aktive Einjustierung und Ausrichtung des Laserstrahls auch während des Betriebes der Laserbearbeitungsmaschine 11 durch die Steuerung 16 ermöglicht ist.

Benachbart zum Zentrierelement 31 und dem Ausrichtelement 38 sind die lösbaren Verbindungselemente 22 vorgesehen. Ein weiteres lösbares Verbindungselement ist benachbart zur Einkoppelstelle 35 der Strahlführung 24 angeordnet. Dadurch kann gewährleistet werden, dass die Trägerplatte 23 exakt ausgerichtet an dem Befestigungsabschnitt 28 befestigt wird und wie Schnittstellen 35, 36 zueinander fluchten.

Zum einfachen Austausch des auswechselbaren Optikmoduls 21 können in Montageöffnungen in der Trägerplatte 23 beispielsweise Hebewerkzeuge 43, wie Halteösen oder dergleichen, eingesetzt werden, um dieses auswechselbare Optikmodul 21 mittels Seilen an einer Hebevorrichtung zu sichern und zu fixieren. Anschließend werden die lösbaren Verbindungselemente 22 gelöst und das Optikmodul 21 von dem Maschinengrundgestell 12 abgehoben. Darauf folgend wird das neue Optikmodul 21 zum Maschinengrundgestell 12 ausgerichtet und über die Positioniereinrichtung 27 lagerichtig zum Maschinengrundgestell 12 positioniert sowie anschließend durch die Befestigung der lösbaren Verbindungselemente 22 wiederum fixiert. Darauf folgend ist die Laserbearbeitungsmaschine 11 für die weitere Werkstückbearbeitung einsatzbereit.

Des Weiteren kann zum einfachen Austausch des auswechselbaren Optikmoduls 21 an dem Maschinengrundgestell 12 eine Führung 45 vorgesehen sein, die an der Trägerplatte 23 angreift. Diese Führung 45 kann als Linearführung ausgebildet sein, wodurch das auswechselbare Optikmodul 21 nach dem Lösen der lösbaren Verbindungselemente 22 in eine Montageposition 46 entfernt vom Befestigungsabschnitt 28 am Maschinengrundgestell 12 überführbar ist. Dadurch kann das auswechselbare Optikmodul 21 gegenüber einem nicht näher dargestellten Gehäuse der Laserbearbeitungsmaschine 11 herausgefahren werden, wodurch eine gute Zugänglichkeit und einfache Handhabung für den darauf folgenden Wechsel des Optikmoduls 21 gegeben ist.

In Figur 6 ist eine schematische Detailansicht zur Aufhängung des Optikmoduls 21 an einer ausziehbaren Führung 45 am Maschinengrundgestell 12 der Laserbearbeitungsmaschine 11 dargestellt. Diese in Figur 6 dargestellte Anordnung zeigt die Montageposition 46 der Trägerplatte 23.

Die Führung 45 umfasst eine Führungsschiene 47, welche gegenüber dem Maschinengrundgestell 12 ein- und ausfahrbar ist. Am vorderen Ende der Führungsschiene 47 ist eine Aufnahme 49 vorgesehen, die zum Vorfixieren des Optikmoduls 21 dient. Zum einfachen und schnellen Auswechseln des Optikmoduls 21 ist vorgesehen, dass die Aufnahme 49 U-förmig ausgebildet ist, so dass ein einfaches Einhängen von oben in die Aufnahme 49 und ein Abheben nach oben zur Demontage des Optikmoduls 21 von der Aufnahme 49 ermöglicht ist. Hierzu sind an der Trägerplatte 23 Befestigungselemente 51, insbesondere Aufnahmebolzen, vorgesehen, die von vorne, insbesondere von oben, in die Aufnahme 59 einsetzbar sind. Am vorderen Ende des Aufnahmebolzens 51 ist ein gefedertes Rastelement 53 vorgesehen, welches an einem Querbolzen 54, der sich quer zur U-förmigen Aufnahme 59 erstreckt, angreift und die Position der Trägerplatte 23 zur Aufnahme 49 sichert. Des Weiteren weist die Aufnahme 49 eine Abstützrolle 56 auf, welche an einer Rückseite der Trägerplatte 23 in der Montageposition anliegt. Diese Abstützrolle 56 bildet einen Abstützpunkt entfernt von dem Befestigungselement 51. Gleichzeitig liegt die Trägerplatte 23 mit dem Aufnahmebolzen 51 an einer Auflagefläche 57 der U-förmigen Aufnahme 49 an. Zusätzlich hintergreift das Rastelement 53 den Querbolzen 54, um ein Lösen des Aufnahmebolzens 51 aus der Aufnahme 49 zu verhindern.

Die gefederte Anordnung des Rastelementes 53 ist derart ausgebildet, dass die Trägerplatte 23 in einer Montageposition 46 gesichert gehalten ist, sich jedoch bei einem Abheben der Trägerplatte 23 nach oben gemäß der dargestellten Pfeilrichtung selbstständig löst. Durch die Abstützrolle 56 kann die Trägerplatte 23 während dem Abheben nach oben daran geführt sein.

## Patentansprüche

1. Auswechselbares Optikmodul für eine Laserbearbeitungsmaschine (11), mit einer Trägerplatte (23), auf der eine Strahlführung (24) fixiert ist, welche an einem Ende eine Einkoppelstelle (35), die an eine einer Laserquelle (18) zugeordneten Auskoppelstelle (36) anschließbar ist, und am anderen Ende einen Bearbeitungskopf (25) aufweist und die Trägerplatte (23) Komponenten einer Positioniereinrichtung (27) aufweist, durch welche die Trägerplatte (23) zum Maschinengrundgestell (12) der Laserbearbeitungsmaschine (11) ausgerichtet ist, **dadurch gekennzeichnet, dass** die Positioniereinrichtung (27) wenigstens ein Zentrierelement (31) und eine komplementäre Zentrieraufnahme (33) und zumindest ein Ausrichtelement (38) sowie eine komplementäre Ausrichtaufnahme (41) aufweist und das zumindest eine Zentrierelement (31) und Ausrichtelement (38), oder die zumindest eine Zentrieraufnahme (33) und Ausrichtaufnahme (41) an der Trägerplatte (23) vorgesehen sind und wobei das wenigstens eine Zentrierelement (31) als zylindrischer Passstift und das zumindest eine Ausrichtelement (38) als Facetten (40) aufweisende Facettenstift ausgebildet ist, welche jeweils in die als Passhülse ausgebildete Zentrieraufnahme (33) und Ausrichtaufnahme (41) einsetzbar sind.

2. Optikmodul nach Anspruch 1, **dadurch gekennzeichnet, dass** die Strahlführung (24) fest an der Trägerplatte (18) angeordnete und einjustierte optische Komponenten umfasst.

3. Optikmodul nach Anspruch 1 oder 2, **dadurch gekennzeichnet, dass** im Bearbeitungskopf (25) ansteuerbare optische Komponenten angeordnet sind.

4. Optikmodul nach einem der vorhergehenden Ansprüche, **dadurch gekennzeichnet, dass** die Trägerplatte (23) wenigstens zwei, vorzugsweise drei, Montagebohrungen für lösbare Verbindungselemente (22) aufweist, durch welche die Trägerplatte (23) an dem Maschinengrundgestell (12) befestigbar ist.

5. Optikmodul nach einem der vorhergehenden Ansprüche, **dadurch gekennzeichnet, dass** die Trägerplatte (23) aus Granit ausgebildet ist.

6. Optikmodul nach einem der vorhergehenden Ansprüche, **dadurch gekennzeichnet, dass** die Trägerplatte (23) Befestigungselemente (51) aufweist, die in eine Aufnahme (49) an einer Führung (45) des Maschinengrundgestells (12) einsetzbar, insbesondere von oben einhängbar, sind.

7. Optikmodul nach einem der vorhergehenden Ansprüche, **dadurch gekennzeichnet, dass** die Trägerplatte (23) Montageöffnungen zur Anbringung von wenigstens einem Hebewerkzeug (43) aufweist.

8. Laserbearbeitungsmaschine mit einem Maschinengrundgestell (12), der einen Werkstückträger (14) zur Aufnahme eines zu bearbeitenden Werkstücks umfasst, und mit einer an eine Laserquelle (18) anschließbaren Strahlführung (24), welche an einem der Laserquelle (18) gegenüber liegenden Ende einen Bearbeitungskopf (25) aufweist, der einen entlang der Strahlführung (24) geführten Laserstrahl auf das zu bearbeitende Werkstück richtet, **dadurch gekennzeichnet, dass** ein auswechselbares Optikmodul (21) nach einem der vorhergehenden Ansprüche an dem Maschinengrundgestell (12) vorgesehen ist.

9. Laserbearbeitungsmaschine nach Anspruch 8, **dadurch gekennzeichnet, dass** an dem Maschinengrundgestell (12) ein Befestigungsabschnitt (28) zur Aufnahme des auswechselbaren Optikmoduls (21) vorgesehen ist, an welchem Komponenten der Positioniereinrichtung (27) vorgesehen sind.

10. Laserbearbeitungsmaschine nach Anspruch 9, **dadurch gekennzeichnet, dass** an dem Befestigungsabschnitt (28) des Maschinengrundgestells (12) oder dem Befestigungsabschnitt (28) des Maschinengrundgestells (12) zugeordnet eine Auskoppelschnittstelle (36) zur am Maschinengrundgestell (12) angeordneten Laserquelle (18) vorgesehen ist.

11. Laserbearbeitungsmaschine nach Anspruch 10, **dadurch gekennzeichnet, dass** zwischen der Laserquelle (18) und der Auskoppelstelle (36) zumindest eine einstellbare, insbesondere ansteuerbare, optische Komponente (19) zur Justierung der Ausrichtung des Laserstrahls vorgesehen ist.

12. Laserbearbeitungsmaschine nach Anspruch 9, **dadurch gekennzeichnet, dass** an dem Maschinengrundgestell (12) Führungen (45) vorgesehen sind, durch welche die Trägerplatte (23) von einer Einbauposition (26), bei der die Trägerplatte (23) an dem Befestigungsabschnitt (28) befestigt ist, in eine Montageposition (46) entfernt von dem Befestigungsabschnitt (28) verfahrbar ist.

13. Laserbearbeitungsmaschine nach Anspruch 12, **dadurch gekennzeichnet, dass** die Führung (45) getrennt zur Positioniereinrichtung (27) an der Trägerplatte (23) angreift.

## Claims

1. Interchangeable optics module for a laser processing machine (11) having a support plate (23) on which the beam guide (24) is mounted, which comprises an input coupling interface (35) on a first end, which is arrangeable to a laser output coupling interface (36) aligned to a laser source (18) and comprises on a second end a processing head (25) and the support plate (23) comprises components of a positioning device (27), by means of which the support plate (23) is aligned with the machine base frame (12) of the laser processing machine (11), **characterized in, that** the positioning device (27) comprises at least one centering element (31) and a complementary centering element receiver (33) and at least one alignment element (38) and a complementary alignment element receiver (41) and the at least one centering element (31) and alignment element (38), or the at least one centering element receiver (33) and alignment element receiver (41) are provided on the support plate (23) and **in that** the at least one centering element (31) is provided as a cylindrical dowel pin and the at least one alignment element (38) is provided as a bevel pin having bevels (40), which are respectively insertable into the centering element receiver (33) and the alignment element receiver (41), which each are formed as a fitting sleeve.

2. Interchangeable optics module according to claim 1, **characterized in, that** the beam guide (24) comprises optical components that are firmly arranged and adjusted on the support plate (23).

3. Interchangeable optics module according to claim 1 or 2, **characterized in, that**, controllable optical components are arranged in the processing head (25).

4. Interchangeable optics module according to one of the preceding claims, **characterized in, that** the support plate (23) comprises at least two, preferably three, mounting holes for releasable connection elements (22), by means of which the support plate (23) is attachable to the machine base frame (12).

5. Interchangeable optics module according to one of the preceding claims, **characterized in, that** the support plate (23) is formed of granite.

6. Interchangeable optics module according to one of the preceding claims, **characterized in, that** the support plate (23) comprises attachment elements (51) that are configured to be inserted into a mounting device (49) on a guide (45) of the machine base frame (12), in particular mountable from above.

7. Interchangeable optics module according to one of the preceding claims, **characterized in, that** the support plate (23) comprises mounting openings for the attachment of at least one lifting tool (43).

8. A laser processing machine comprising a machine base frame (12) having a workpiece carrier (14) for receiving a workpiece to be processed, and having a beam guide (24) to be arranged to a laser source (18), which comprises on an opposite end of the laser source (18) a processing head (25), which directs a laser beam guided along the beam guide (24) to the workpiece to be processed, **characterized in, that** an interchangeable optics module (21) according to one of the preceding claims is provided on the machine base frame (12).

9. Laser processing machine according to claim 8, **characterized in, that** an attachment section (28) for receiving the interchangeable optics module (21) is arranged on the machine base frame (12), and components of a positioning device (27) are provided thereon.

10. Laser processing machine according to claim 9, **characterized in, that** the attachment (28) of the machine base frame (12) is provided to or directed to the laser source (18) arranged on the machine base frame (12).

11. Laser processing machine according to claim 10, **characterized in, that** between the laser source (18) and the output coupling interface (36) at least one adjustable, in particular controllable, optical component (19) is provided for adjusting alignment of the laser beam.

12. Laser processing machine according to claim 9, **characterized in, that** guides (45) are arranged on the machine base frame (12) by which the support plate (23) is moveable from an installation position (26) in which the base plate (23) is mounted on the attachment section (28), into a mounting position (46), away from the attachment section (28).

13. Laser processing machine according to claim 12, **characterized in, that** the guide (45) engages with the support plate (23) separately from the positioning device (27).

## Revendications

1. Module optique échangeable pour une machine d'usinage au laser (11) pourvue d'une plaque de support (23) sur laquelle est fixé un guide de faisceau (24) qui présente, à une extrémité, un point de couplage (35) lequel peut être connecté à un point de découplage (36) affecté à une source laser (18) et, à l'autre extrémité, une tête d'usinage (25), et la plaque de support (23) présentant des composants d'un dispositif de positionnement (27) grâce auquel la plaque de support (23) est orientée par rapport au socle de machine (12) de la machine d'usinage au laser (11), **caractérisé en ce que** le dispositif de positionnement (27) présente au moins un élément de centrage (31) et une réception de centrage (33) complémentaire et au moins un élément d'orientation (38) ainsi qu'une réception d'orientation (38) complémentaire, et **en ce que** ledit au moins un élément de centrage (31) et ledit au moins un élément d'orientation (38) ou ladite au moins une réception de centrage (33) et ladite au moins une réception d'orientation (41) sont prévus sur la plaque de support (23), ledit au moins un élément de centrage (31) étant réalisé en tant que tige ajustée cylindrique et ledit au moins un élément d'orientation (38) étant réalisé en tant que tige à facettes présentant des facettes (40), lesquels éléments peuvent être respectivement insérés dans la réception de centrage (33) et la réception d'orientation (41) formées en tant que douilles ajustées.

2. Module optique selon la revendication 1, **caractérisé en ce que** le guide de faisceau (24) comprend des composants optiques ajustés qui sont disposés de manière fixe à la plaque de support (18).

3. Module optique selon la revendication 1 ou 2, **caractérisé en ce que** des composants optiques activables sont disposés dans la tête d'usinage (25) .

4. Module optique selon l'une quelconque des revendications précédentes, **caractérisé en ce que** la plaque de support (23) présente au moins deux, de préférence trois, trous de montage destinés à des éléments d'assemblage amovibles (22) grâce auxquels la plaque de support (23) peut être fixée au socle de machine (12).

5. Module optique selon l'une quelconque des revendications précédentes, **caractérisé en ce que** la plaque de support (23) est réalisée en granit.

6. Module optique selon l'une quelconque des revendications précédentes, **caractérisé en ce que** la plaque de support (23) présente des éléments de fixation (51) qui peuvent être insérés, en particulier accrochés par le haut, dans une réception (49) prévue dans un guide (45) du socle de machine (12).

7. Module optique selon l'une quelconque des revendications précédentes, **caractérisé en ce que** la plaque de support (23) présente des orifices de montage destinés à fixer au moins un outil de levage (43) .

8. Machine d'usinage au laser pourvue d'un socle de machine (12) qui comprend un porte-pièce (14) destiné à recevoir une pièce devant être usinée et d'un guide de faisceau (24) qui peut être connecté à une source laser (18) et qui présente, à une extrémité située à l'opposé de la source laser (18), une tête d'usinage (25) qui dirige un faisceau laser conduit le long du guide de faisceau (24) sur la pièce devant être usinée, **caractérisée en ce qu'**un module optique échangeable (21) selon l'une quelconque des revendications précédentes est prévu sur le socle de machine (12).

9. Machine d'usinage au laser selon la revendication 8, **caractérisée en ce que** sur le socle de machine (12) est prévue une partie de fixation (28) qui est destinée à recevoir le module optique échangeable (21) et sur laquelle sont prévus des composants du dispositif de positionnement (27).

10. Machine d'usinage au laser selon la revendication 9, **caractérisée en ce qu'**un point de découplage (36) donnant vers la source laser (18) disposée sur le socle de machine (12) est prévu sur la partie de fixation (28) du socle de machine (12) ou est affecté à la partie de fixation (28) du socle de machine (12).

11. Machine d'usinage au laser selon la revendication 10, **caractérisée en ce qu'**au moins un composant optique (19) réglable, en particulier activable, est prévu entre la source laser (18) et le point de découplage (36) en vue d'ajuster l'orientation du faisceau laser.

12. Machine d'usinage au laser selon la revendication 9, **caractérisée en ce que** sur le socle de machine (12) sont prévus des guides (45) grâce auxquels la plaque de support (23) peut passer d'une position montée (26) dans laquelle ladite plaque de support (23) est fixée à la partie de fixation (28) à une position de montage (46) située loin de ladite partie de fixation (28).

13. Machine d'usinage au laser selon la revendication 12, **caractérisée en ce que** le guide (45) prend prise sur la plaque de support (23) de manière séparée du dispositif de positionnement (27).
